# EUROPEAN PATENT APPLICATION

(11) **EP 1 752 681 A1**
(43) Date of publication of application: **14.02.2007**
(21) Application number: 06291240.7
(22) Date of filing: 31.07.2006
(51) Int. Cl.: F16D 69/02

(54) **Manufacturing method for raw friction material granulation substance and friction material with raw friction material granulation substance**

(30) Priority: 01.08.2005 JP 2005022673
(71) Applicant: Nisshinbo Industries, Inc., Chuo-ku, Tokyo 103-8650 (JP)
(72) Inventor: Chiba, Masanori, Nisshinbo Industries, Inc., Oura-gun, Gunma-ken (JP); Ishii, Yasuji, Nisshinbo Industries, Inc., Oura-gun, Gunma-ken (JP)
(74) Representative: Gendron, Vincent Christian

(57) **Abstract**

To provide the friction material that does not cause cracking when the heat-press molding after granulation and obtain the sufficient binding force and strength and the raw friction material granulation substance, which has sufficient strength, manufactured using the friction material. A part of the binder blended in the friction material is blended when granulating the friction material and the rest is powdered to be mixed with the formed particle friction material. The powdered binder is adhered to the particle friction material by such as the van der Waals force, electrostatic force, or adhesive force of the small amount of water contained in the binder or the raw friction material, thereby obtaining the strength of the friction material when the friction material is press-heated.

## Description

### FIELD OF THE INVENTION

This invention relates to the friction material for such as a disc brake pad, brake lining, and crutch facing for vehicles and especially relates to the manufacturing method for the raw friction material granulation substance by granulating the powdered raw friction material mixture into a tablet-shape and the friction material manufactured utilizing the raw friction material granulation substance.

### BACKGROUND OF THE INVENTION

The friction material may be formed by the powdered raw friction material mixture as mixing a thermosetting resin such as phenol resin as the binder with fiber materials such as an organic fiber, an inorganic fiber, and a metal fiber, friction modifiers such as graphite and barium sulfate, and fillers such as a natural rubber and a synthetic rubber.

The disc brake pad is formed by making the friction material as pressurizing and heating the powdered raw friction material mixture and at the same time fixing the same onto a back plate. Alternatively, such as the brake lining, the product can be made simply by pressurizing and heating the powdered raw friction material mixture, which is not fixed onto the back plate at the same time. The powdered raw friction material mixture is such that the above-described plural materials including the fiber material and the powdered material are mixed, and the size of the particle varies depending upon the type of material, thereby causing problems of easy segregation and uniform quality.

Granulating the powdered raw friction material mixture into a tablet-shape is a known method to resolve the above problems. While plural raw materials are uniformly being mixed, the materials are granulated into particles to become the raw friction material granulation substance so as to prevent the segregation.

Japanese Provisional Patent Publication Nos. 7-290447, 6-136145, and 10-310765 are known to disclose the granulation method for granulating the raw materials into the raw friction material granulation substance.

The Japanese Provisional Patent Publication No. 7-290447 proposes that the raw friction material granulation substance is obtained as the powdered raw friction material mixture of a reinforcement fiber, an organic and inorganic filler, a rubber powder, and the thermosetting resin, is heated at 60°C or higher but lower than the curing temperature of the thermosetting resin, and half-molten raw material is pressed out from an extruding bore on an extruding plate to be finely cut by a chopper.

The Japanese Provisional Patent Publication No. 6-136145 proposes that the raw friction material granulation substance is obtained as a agglomerating agent, made of water-alcohol mixture solvent, is applied and mixed to moisturize and to give viscosity to the raw material, which is granulated into particles and is dried while raw materials mainly composed of the thermosetting resin binder, the fiber base material, and the friction modifier, are being dry-mixed.

Also, the applicant of this invention proposed, in the previous Japanese Patent Application No. 2004-334342, the granulation method for the raw friction material granulation substance wherein no solvent or the small amount, i.e., 5 weight % or less, of solvent, is applied into the powdered raw friction material mixture obtained as mixing plural materials at least including an adhesive material, which is pressurized into a strip by pressure rolls and is crushed to obtain the raw friction material granulation substance.

However, the raw friction material granulation substance of the Japanese Provisional Patent Publication Nos. 7-290447, 6-136145, and 10-310765 have problems such as causing cracks and tending to reduce the strength after the heat-press molding. These problems occur due to the reduction of a binding force among the particles. Especially, in the dry granulation of the Japanese Provisional Patent Publication No. 7-290447, when the binder contained in the raw friction material granulation substance is granulated into the tablet-shape, the temperature is increasing and the curing of the binder progresses to some degrees, and the binding force among the particles is reduced when producing the friction material during the heat-press molding to become the friction material.

The Japanese Provisional Patent Publication No. 10-310765 proposes to form the binder layer on a surface of the raw friction material granulation substance by rolling and flowing. The granulation method due to rolling and flowing is a method for applying a powdered material on a wire net, supplying air from a lower direction, and spraying liquid from an upper direction to give a certain moisture to flow the raw material for granulation. When a rotation plate is used instead of the wire net, the granulation occurs due to the rolling and flowing as air flow around the rotation plate causing the flow together with rolling. Although organic solvent and water type liquid may be utilized as the liquid, the organic solvent has problems in the work sanitation aspect and work safety aspects, and therefore the water type liquid is preferably used.

In the Japanese Provisional Patent Publication No. 10-310765, at first, a general granulation is conducted, and the rolling and flowing by the binder can form the binder layer on the raw friction material granulation substance thereafter. According to this method, the strength of the friction material after heat-press molding can be increased.

However, in the rolling and flow method of this third patent document, solid, liquid, and gas interface energy are used as a basic force when compressing and consolidating; therefore, liquid is necessarily applied, and a drying step of the granulation substance and a moisture conditioning step are necessary, thereby extending the time of granulation which is not efficient. Also, the usable binder therein is limited to resin that does not reduce the strength upon applying the liquid. For example, Novolac phenol resin has widely been used as the binder of the friction material because of its high heat resistance but has a characteristic of causing red-deterioration when absorbing water, thereby cracking the heat-press molded friction material and reducing the strength thereof.

### SUMMARY OF THE INVENTION

This invention was made in consideration of the above-facts and has an object to provide the raw friction material granulation substance, which does not cause the crack when the friction material is molded as heating and pressurizing after granulating, is able to manufacture in a short period of time without the moisture conditioning and drying step, and does not limit the use of resin type, and the friction material, which is manufactured using the raw friction material granulation substance.

The manufacturing method for the raw friction material granulation substance of this invention so as to attain the above-described object comprises the step of granulating the friction material composition which is the mix of plural raw materials with the binder, wherein plural raw materials except for a part of binder are mixed and granulated, and the previously excluded powdered binder is blended in and stirred with the granulated particle friction material.

This invention may further comprises steps of blending 20 - 97 volume % of the binder in, which is mixed in the friction material, when the friction material is granulated, and mixing remaining 3 - 80 volume % of the binder in a powdered form in the formed particle friction material, or adhering the entire powdered binder to the particle friction material.

The powdered raw mixture may be made as mixing, in the predetermined ratio, the fiber materials such as the organic fiber, the inorganic fiber, and the metal fiber, friction modifiers such as graphite and barium sulfate, and fillers such as the natural rubber and the synthetic rubber, with the binder made of the thermosetting resin such as phenol resin. At that time, the amount/ratio of binder to be applied is designed smaller and the rest of the binder is powdered and separated.

The mixed powdered raw material mixture is granulated into the tablet-shape by either one of the dry granulation method, the wet granulation method, the rolling-flowing granulation method, or the method disclosed in the Japanese Provisional Patent Publication No. 2004-334342. The granulated particle friction material is mixed and stirred with the remaining powdered binder. This powder is adhered to a surface and pockets on of the particle friction material by such as a van der Waals force, an electrostatic force, or an adhesive force of the small amount of water contained in the binder or the raw friction material. If the amount of the powdered binder is appropriate, the entire binder is adhered to the particle friction material, which does not cause the segregation of the powdered binder.

According to the manufacturing method for the raw friction material granulation substance of this invention, the raw material of the friction material can be unified, by granulating into the tablet-shape, adhering the powdered binder approximately, evenly on the surface of the raw friction material granulation substance, and when the raw friction material granulation substance is press-heated to be fixed to the back plate to be the friction material, the raw friction material granulation substances firmly bound each other, which eliminates the possibility of cracking and provides the necessary strength to the friction material.

Also, the amount of powdered binder added after the granulation is within the amount of adhering due to the van der Waals force, the electrostatic force, or the adhesive force of the small amount of water contained in the binder or the raw friction material, thereby preventing the possibility of separating the binder to segregate the friction material and maintaining the uniformity of the raw material. The friction material after the granulation is simply mixed and stirred with the powdered binder, and drying and moisturizing is not necessary, which gives an easy manufacturing process. Also, no liquid is necessary when adhering the powdered binder to the particle friction material, and therefore the resin, which reduces the strength when adding water such as the Novolac type phenol resin, can be used without a problem.

### BRIEF DESCRIPTION OF THE DRAWINGS

The above and other objects of the present invention will become readily apparent by reference to the following detailed description when considered in conjunction with the accompanying drawings wherein:
FIG. 1 is a view illustrating one example of the granulation method for the particle friction material of this invention;
FIG. 2 is a table showing embodiments of this invention; and
FIG. 3 is a table showing the comparison examples thereof.

### DESCRIPTION OF THE PREFERRED EMBODIMENTS

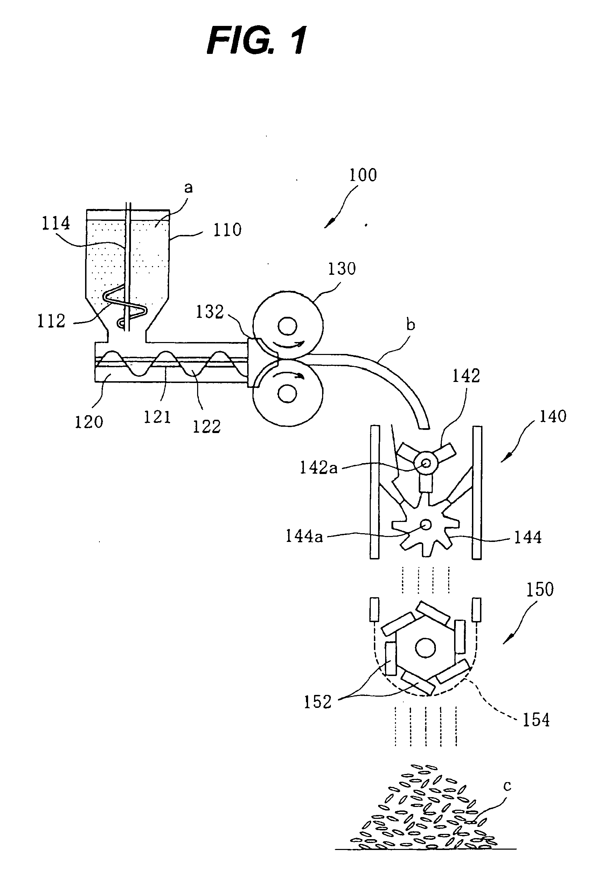

Embodiments of this invention will be explained with reference to the accompanied drawings. FIG. 1 is a view illustrating a structure of a granulator for implementing the granulation method for the friction material. This granulator 100 is comprised of a cylindrical hopper 110, a screw feeder 120 positioned at a lower portion of the hopper 110, a pair of upper and lower pressure rolls 130 positioned at an outlet of the screw feeder 120, a powdering machine 140 positioned at a lower side of outlet of the pressure roll 130, and a particle size regulator 150 connected with a lower portion of the powdering machine 140.

A spiral stirring device 112 is rotatably positioned inside the hopper 110. By rotating the stirring device 112 with an axle 114 as the fulcrum, the powdered raw material within the hopper 110 is stirred to remove jamming, thereby supplying to the screw feeder 120 smoothly.

The screw feeder 120 is a horizontal rotation axle 121 with a spiral transferring blade 122, which transfers the powdered raw material dropped from the hopper 110 as being stirred to the pressure roll 130.

The pressure roll 130 is comprised of a pair of upper and lower steel rolls arranged in parallel, wherein one roller is pressurized against the other roller making a line contact by a resilient body, and the pressure contacting force is adjustable, which is 2.4 x 10⁴N/cm in the embodiment. Furthermore, the material passes the pressure roll 130 to be compressed in a plate-like shape.

The powdering machine 140 has two powdering machines, i.e., an auxiliary powdering machine 142 and a main powdering machine 144. The main powdering machine 142 has plural rotation plates with three powdering blades around the rotation axle 142a, and the powdering blades have triple spiral around the rotation axle 142a. The auxiliary powdering machine 144 has eight small powdering blades of the auxiliary powdering machine 142 instead of three powdering blades, and each powdering blade has eight-thread spiral around the rotation axle 144a. These powdering blades powder the rotating material into small particles.

The particle size regulator 150 is a hexagon shape with a pressuring plate 152 at each surface and with the wire net surrounding the outside of the pressuring plate 152. The particles powdered by the powdering machine 140 are pressurized against the wire net 154 by the pressuring plate 152, and the particles, as being crushed, pass through interstices to form the certain size of particles.

Next, the granulation method for the friction material will be explained. The powdered raw material a is applied in the hopper 110. The powdered raw material a is a mixture of such as the fiber material, filler, and binder. The solvent with 0.1 - 5.0 weight or lower is added in the powdered raw material a. Water is utilized as the solvent. When the adhesive material is added in the powdered raw material a, the amount of adding the solvent can be 5 weight % or lower down to 0 weight %, i.e., no addition is appropriate. The most preferable amount for the addition is 2 - 3 weight % regardless of whether the adhesive material is added or not.

Furthermore, when the water is utilized as the solvent, the relation with the water contained in the respective raw material of the powdered raw material a becomes a problem. Moisture temperature contained in the powdered raw material a is 20°C, and the water ratio is to be in an equilibrium state when the relational humidity is 65%, wherein the amount of water to be added is to be the amount added in the powdered raw material a containing 20°C moisture temperature and the moisture percentage becoming the equilibrium state when the relational humidity is 65%.

The fiber material can be the organic fiber, inorganic fiber, or metal fiber, wherein the organic fiber can be aramid fiber, cellulose fiber, or acrylic fiber, the inorganic fiber can be a rock wall, glass fiber, or sepiolite, and the metal fiber can be a stainless steel fiber, steel fiber, copper fiber, brass fiber, or bronze fiber.

The filler is for a filling purpose and for achieving a lubrication property to obtain the stable friction and can be a metal piece/metal powder, barium sulfate, calcium carbonate, graphite, and a synthetic rubber or natural rubber such as NBR as a adhesive organic filler.

The binder is to bind the fiber and the filler and can be the phenol resin, urea resin, epoxy resin, and benzoxazine resin that are thermosetting resins. The amount of binder contained in the friction material, in this invention, is about 10 - 20 volume %; however, the binder to be blended herein is to be 20 - 97 volume % of the blending amount, and the remaining 3 - 80 volume % is remained in the powder state and is separated. If the amount becomes lower than 20 volume %, the existence of the binder becomes unbalanced, and the phenomena similar to the segregation occurs, which disturbs the uniformity of the friction material and reduces the strength thereof. Furthermore, if the amount becomes higher than 97 volume %, the amount of the powdered binder to be added after the granulation to the particles becomes small, which tends to cause cracking and prevent from obtaining the desirable strength upon obtaining the friction material.

The powdered raw material a with the above-described raw materials is supplied in the hopper 110. The powdered raw material a supplied in the hopper 110 contains the large volume of air, and the powdered raw material a moderately descends within the hopper 110. In this step, deairing takes place as receiving the pressure of the raw material accumulated at the upper portion thereof.

The deaired powdered raw material a may be lumped in a arch shape in the middle of the step, and therefore the stirring device 112 is used to stir the same to prevent this problem. The powdered raw material a descends in the hopper 110 and reaches to the screw feeder 120.

When the amount of the powdered raw material a in the hopper 110 is more than the predetermined amount, the amount of the powdered raw material a supplied in the screw feeder 120 becomes the predetermined amount. The screw feeder 120 transfers the powdered raw material a toward the pressure rolls 130 as stirring the same and is pressurized in a supply box 132 positioned at the inlet of the pressure roll 130.

The powdered raw material a pressurized in the supply box 132 is deaired as entering in the pressure roll 130 and become a strip raw material b by the adhesive force of the adhesive filler. The strip raw material b, when exiting the pressure rolls 130, goes into the powdering machine 140 located at the lower portion. The strip material b in the powdering machine 140 becomes rough particles by use of the auxiliary powdering machine 142, which is finely powdered at the main powdering machine 144.

Thereafter, the finely powdered materials enter in the particle size regulator 150 and is pressurized against the wire net 154 by the pressuring plate 152, thereby becoming particle raw materials c which are uniformly sized to the interstices of the wire net. The particle raw materials c formed at the granulator 100 are in squamations. The squamation here means a flat plate-like piece with thicker center and thinner circumference.

The granulator 100 does not have a heater and no heating take places. As pressurizing by the pressure roll 130 generates slight heat but the temperature around 60°C is the limit and no melting of the thermosetting resin is taken place.

The adhesive material such as NBR is contained in the powdered raw material a. When the powdered raw material a is compressed, the adhesive material adheres to other materials to become solid strip raw material b. The adhesive material adheres to other materials just like soft clay and functions as an adhesive agent; however, no heat treatment is applied thereto, and the particle raw material c can be preformed similar to the powdered raw material a.

Also, when the material becomes the particle raw material c, the adhesive material such as NBR is not independent and is in the condition of being attached to other materials. Therefore, the material does not adhere to an inner wall of the metal die, which may prevent from making irregular shapes at the performing state.

In the above-described embodiment, the powdered raw material a passes between the pressure rolls 130; however, the powdered raw material a may be supplied in the metal molding die and pressurized by the pressuring device to form the solid raw material as the strip raw material b and to granulate by crashing the same as using appropriate means. In this situation, neither solvent nor heating is necessary, and alternatively very small amount of solvent of 5 weight % or lower and no heating is necessary. In the case of manufacturing a normal preformed product, the pressure added to the powdered raw material a is 20 - 70MPa but the granulation of this invention requires the pressure, which is multiple times higher, at 50 300MPa. This pressure is considered substantially same as the compressing force applied to the pressure roll 130, i.e., 5 x 10³ - 3 x 10⁴N/cm.

The particles formed though the granulation method of this invention is preferably 1 - 4mm in diameter. When the diameter is over 4mm, the leveling measurement property is reduced, and when it is less than 1 mm, the fiber component is cut off. The above-described embodiment involves the adhesive material; however, the same granulation of the powdered raw material as adding the adhesive material is possible without adding the adhesive material if 0.1 - 5.0 weight % of the solvent is added. This may be because the granulation method of this invention applies the higher pressure, which is multiple times higher than the normal preforming.

The granulated particle friction material is mixed and stirred with 3 - 80 volume % of the previously separated powdered binder. The diameter of the binder is extremely small, i.e., 0.005 - 2000 µm, comparing to the diameter of the particle friction material 1 - 4mm, and therefore the binder can be absorbed in the surface and the pockets on the particle friction material by such as a van der Waals force, an electrostatic force, and the adhesive force of the small amount of moisture contained in the binder and the raw friction material. It is preferable that the entire amount of the added binder is adhered to the surface of the particle friction material and does not cause the segregation as the powdered binder.

As such, the manufactured raw friction material granulation, when pressurized, heated, and fixed to the back plate, is such that the binder adhered on the surface of the raw friction material granulation substance is entirely melted to be cured, thereby obtaining the necessary strength for such as the friction material of the brake pad.

Also, the granulation method is not limited to what is described above, and the traditionally performed dry granulation method (for example in the first patent document), wet granulation method (for example in the second patent document), and the rolling-flowing method (for example in the third patent document) can be used to granulate to form the particle friction material, which can be added with the powdered binder.

Embodiments

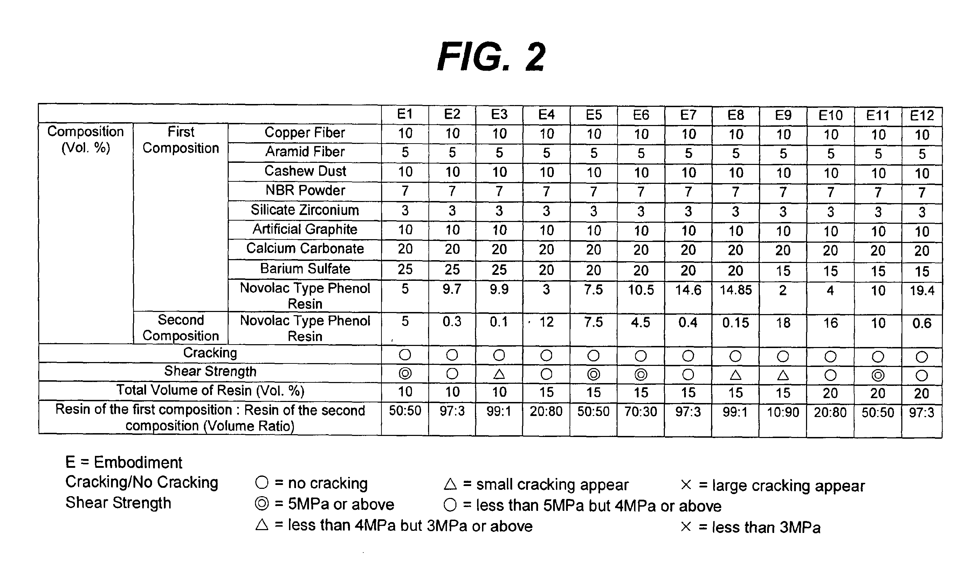

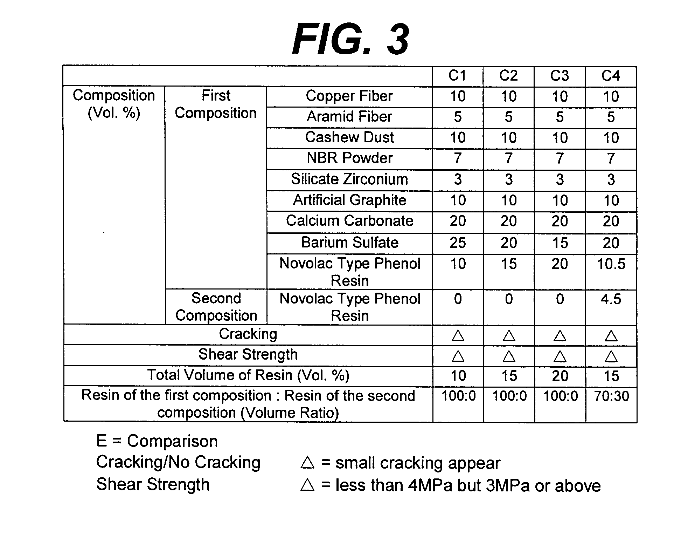

An embodiment of this invention appears on FIG. 2 and the comparison example appears on FIG. 3. Cracking on the finished product is visually inspected, and a shear strength of the finished product is measured according to JASO C427.

### Embodiments 1 - 12

A first composition of FIG. 2 shows the friction raw material of the embodiments 1 - 12 and the mixing rate (volume %) of the respective raw material. The raw friction material of the first composition in this disclosure is compressed, powdered, and crushed to granulate at 2.4 x 10⁴N/cm by the granulator of FIG. 1, and the raw friction material granulation substance is obtained by adding, mixing, and stirring the powdered Novolac type phenol resin powder of the second composition as the binder to be added later. The raw friction material granulation substance is supplied in a heat molding die, and the back plate is superposed thereon to be heat-press molded at the molding temperature of 170°C and the molding pressure of 20MPa for about 10 minutes, to be heat treated at 250°C for about 5 hours after the curing, and to paint, bake, and grind to obtain the brake pad of the embodiments 1 - 12.

For the embodiments 1 - 3, the amount of addition of the binder is 10 volume % for both the first and the second compositions. Similarly for the embodiments 4 - 8, the addition is 15 volume % and for the embodiments 9 - 12, the addition is 20 volume %.. 10 - 20 volume % is same as the amount range for the conventional raw friction material addition.

No cracking can be seen in the embodiments 1 - 12. However, as shown in the embodiments 3 and 8, when the binder to be added after the granulation becomes 1 volume %, the shear strength is reduced. This ratio is 3 volume % or higher is acceptable, and 30 - 50 volume % brings the shear strength up to the maximum and is considered to be a preferable range.

### Comparison Examples 1 - 3

The raw friction material of the first composition in the disclosure of FIG. 3 is compressed, powdered, and crushed to granulate at 2.4 x 10⁴N/cm by the granulator of FIG. 1. In these comparison examples 1 - 3, the second composition is zero and no binder is added after the granulation. The raw friction material granulation substance is supplied in a heat molding die, and the back plate is superposed thereon to be heat-press molded at the molding temperature of 170°C and the molding pressure of 20MPa for about 10 minutes, to be heat treated at 250°C for about 5 hours after the curing, and to paint, bake, and grind to obtain the brake pad of the comparison examples 1 - 3. As a result, although the ratio of binder addition is in the same range as the embodiments 1 - 12, very small cracking appears and the shear strength is reduced. Accordingly, adding the binder after the granulation as shown in this invention is considered superior to the conventional methods.

### Comparison Example 4

The raw friction material of the first composition disclosed in the disclosure of FIG. 3 is compressed, powdered, and crushed to granulate at 2.4 x 10⁴N/cm by the granulator of FIG. 1, and as water is added therein, the raw friction material granulation substance obtained as roll-flowing the Novolac type phenol resin of the second composition is supplied in the heat molding die to be superposed on the back plate, which is to be heat-press molded at the molding temperature of 170°C and the molding pressure of 20MPa for about 10 minutes, to be heat treated at 250°C for about 5 hours after the curing, and to paint, bake, and grind to obtain the brake pad of the comparison example 4; however, very small cracking can be found and the shear strength is reduced. This cracking is considered due to the red-deterioration caused in the Novolac type phenol resin as absorbing water.

## Claims

**1.** A manufacturing method for a raw friction material granulation substance comprising a step of granulating a friction material composition which is a mix of plural raw materials with a binder, wherein plural raw materials except for a part of binder are mixed and granulated, and a previously excluded powdered binder is blended in and stirred with the granulated particle friction material.

**2.** The manufacturing method for the raw friction material granulation substance according to claim 1, further comprising steps of blending 20 - 97 volume % of the binder in, which is mixed in the friction material, is when the friction material is granulated, and mixing remaining 3 - 80 volume % of the binder in a powdered form in the formed particle friction material.

**3.** The manufacturing method for the raw friction material granulation substance according to claim 2, **characterized in that** entire power binder adheres to the particle friction material.

**4.** The friction material, comprised of a heat-press molded raw friction material granulation substance obtained through steps according to claims 1 - 3.
